Europäisches Patentamt

European Patent Office

Office européen des brevets

(11) Publication number: **0 096 258**
**A1**

(12) # EUROPEAN PATENT APPLICATION

(21) Application number: 83104948.1

(22) Date of filing: 19.05.83

(51) Int. Cl.³: **B 30 B 15/32**
**B 23 Q 7/04**

(30) Priority: 07.06.82 US 386106

(43) Date of publication of application:
21.12.83 Bulletin 83/51

(84) Designated Contracting States:
CH DE FR GB IT LI SE

(71) Applicant: GENERAL ELECTRIC COMPANY
1 River Road
Schenectady New York 12305(US)

(72) Inventor: McEvoy, Charles Burke
3460 Devenshire
Sterling Heights Michigan 48077(US)

(74) Representative: Voigt, Reinhard, Dipl.-Ing. European
Patent Attorney et al,
Kaiserstrasse 41
D-6000 Frankfurt (Main) 1(DE)

(54) Pick-off device for removing manufactured part from manufacturing machine.

(57) An improved pick-up device for removing a press part
from the compacting pressed point of operation of a
compacting press and deliver the part to a collection point
remote from the point of operation includes an elongated,
pivoted arm member having a pick-off unit telescopingly
connected to one end thereof. The pick-off device includes a
suction grip unit to pick up the part from the pressed cavity,
after which an actuator pivots the elongated member to a
second pivotal position where the manufactured part may
then be deposited at the collection point. The pick-off device
may include an electronic part sensing component, and the
pick-up device may be operated independently or in conjunc-
tion with a robot, and is effective to satisfy present compact-
ing press operator safety regulations.

Croydon Printing Company Ltd

./...

FIG.1

UNITED STATES PATENT APPLICATION

OF:  Charles B. McEvoy

FOR:  PICK-OFF DEVICE FOR REMOVING
MANUFACTURED PART FROM MANU-
FACTURING MACHINE

BACKGROUND OF THE INVENTION

This invention relates to an automatic pressed part pick-up device, and more particularly, to a pick-up device which operates at high speed and is capable of precise positioning to remove a manufactured part from a compacting press apparatus point of operation and to precisely deliver that part to a collection point in an efficient and reliable manner.

In view of various federal and state regulations governing the safety requirements for the operation of different types of compacting presses used in the manufacture of pressed parts, such as pressed metallic parts, and in view of the high speed operation of such compacting presses, it is necessary to provide means for removing the formed, pressed part following each cycle of operation of the compacting press.  More particularly, for each cycle of operation of the compacting press, the formed part which is disposed at the compacting press point of operation must be physically removed and transferred to a collection point prior to the next cycle of operation in the press.  Accuracy of positioning is a prime requirement for repetitive mass production of fragile parts.

The subject invention provides a pick-off device which does not require any part of the body of the operator to be exposed to danger during operation of the compacting press. More particularly, the subject invention provides a pick-off device for removing and transferring each manufactured part by a suction grip means from the point of manufacture in the compacting press to a collection point adjacent the machine in such manner as to meet all of the current federal and state safety regulations governing the operation of a compacting press. Moreover, the suction gripping means is highly desirable because of its adaptability to careful handling of fragile parts.

## SUMMARY OF THE INVENTION

According to the present invention, there is provided a pick-off device including a platform which is disposed and preferably fixedly mounted adjacent the manufacturing machine, with a portion of the platform defining a collection point for the collection of the pressed parts. An elongated member, of generally angular or bent configuration is pivotally mounted at an intermediate point thereof on the platform, with one end of the angled member being operatively associated with an actuator mounted on the platform. The actuator is operative to pivot the elongated member from a first position in which the opposite end of the elongated member is disposed adjacent the compacting press point of operation, to a second position wherein the opposite end of the elongated member is disposed adjacent the collection point on the platform. A pick-up and holding means, such as a suction grip unit, is connected to the opposite end of the elongated member, preferably by a telescoping piston arrangement, thereby enabling the pick-off and holding unit to be accurately positioned in the region of the compacting press point of operation of the compacting press, and hence over the pressed part. Preferably, an electronic part sensing component forms a portion of the pick-off unit. In operation, after a press part has been manufactured, and the compacting press plates are separated, the actuator causes the elongated member to be rotated about its pivot mounting such that the pick-off package or unit is disposed adjacent the compacting press point of operation sensed by the electronic part sensing component. At such time, the suction grip unit is operated thereby engaging a flat side of the periphery of the press part to the pick-off device, and the actuator is then actuated so as to pivot the elongated member in the reverse direction until such time as the pressed part is disposed over the collection point on the platform. The pressed part is then released from the pick-off unit, and the compacting press is then recycled. The pick-off device can operate independently of or in conjunction with a robot, and the utilization of the subject device as an operator attended operation fulfills all current federal and state compacting press safety regulations. Such a device finds an important application in the manufacturing process for cemented carbides where the metallic powders are first formed in a compacting press apparatus into a desired press part configuration, usually a polygon.

Other objects and advantages of the subject invention will become apparent from the following detailed description of the preferred embodiment, taken in conjunction with the drawings in which:

BRIEF DESCRIPTION OF THE DRAWINGS

Fig. 1 is a top plan view of the pick-off device of the subject invention as mounted adjacent the lower die plate of a compacting press;

Fig. 2 is a side elevational view of the subject pick-off device as shown in Fig. 1; and

Fig. 3 is a front elevation view of the pick-off device of the subject invention, with the actuated position of the device being shown in dotted lines.

## DETAILED DESCRIPTION OF THE PREFERRED EMBODIMENT

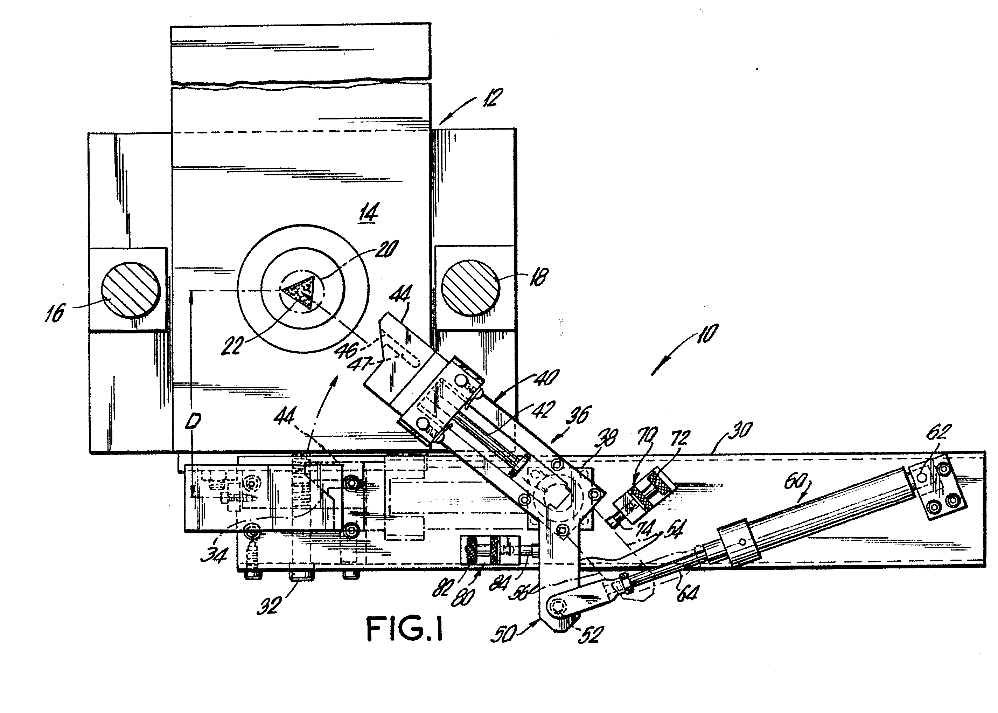

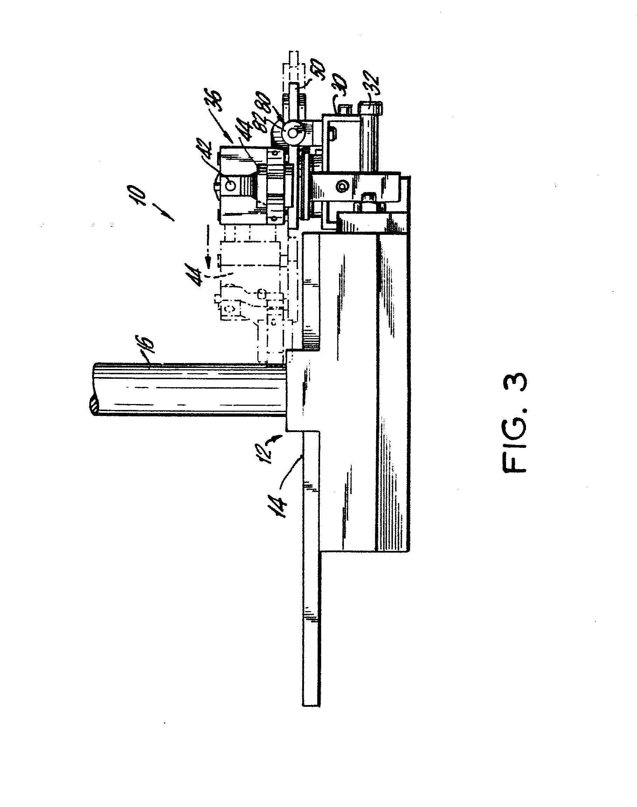

Referring to Figures 1 and 3, the pick-off device of the subject invention is generally designated by the numeral 10 and is adapted for use in conjunction with a manufacturing machine, such as a compacting press, designated by the numeral 12. The compacting press 12 includes a lower die plate 14 which cooperates with an upper die plate (not shown) for compacting of particles of materials into a desired pressed part, designated by the numeral 22. The upper and lower die plates are maintained in alignment by vertical guide posts 16, 18, with the compacting press area or point of operation being designated at 20. The pressed part 22 is shown as being triangular, but may be of any desired configuration according to the configuration of the die plates. The pressed part 22 may, for example, be formed of non-metallic refractory powdered materials, as well as metallic particles of metal carbides, nitrides, and other oxides which, after compacting into the desired press part 22, may be sintered to complete the formation of the pressed part 22.

In order to comply with federal and state regulations concerning operator safety in the operation of the compacting press 12, the pick-off device 10 of the subject invention provides an arrangement for removing the pressed part 22 from the lower die plate 14, and transferring same to a collection point, designated by the numeral 34, which is disposed on the pick-off device. The distance of travel between the compacting press point of operation 20 and the collection point 34 is designated by the letter "D" and may be on the order of 6 inches. The operation of the compacting press 12 is cyclic, with the cycles of operation being on the order of 28 cycles per minute, whereby it is imperative that the pick-off device be efficient and rapid in operation in cyclically removing and transferring pressed parts 22 from the point 20 and depositing them on the collection point 34. It is also imperative that the pick-off device be capable of precisely picking up a part 20 and depositing it precisely in a given location. The suction grip unit of the present invention is most adaptable to this precision operation, and is easily adjustable to softly but firmly engage part 22.

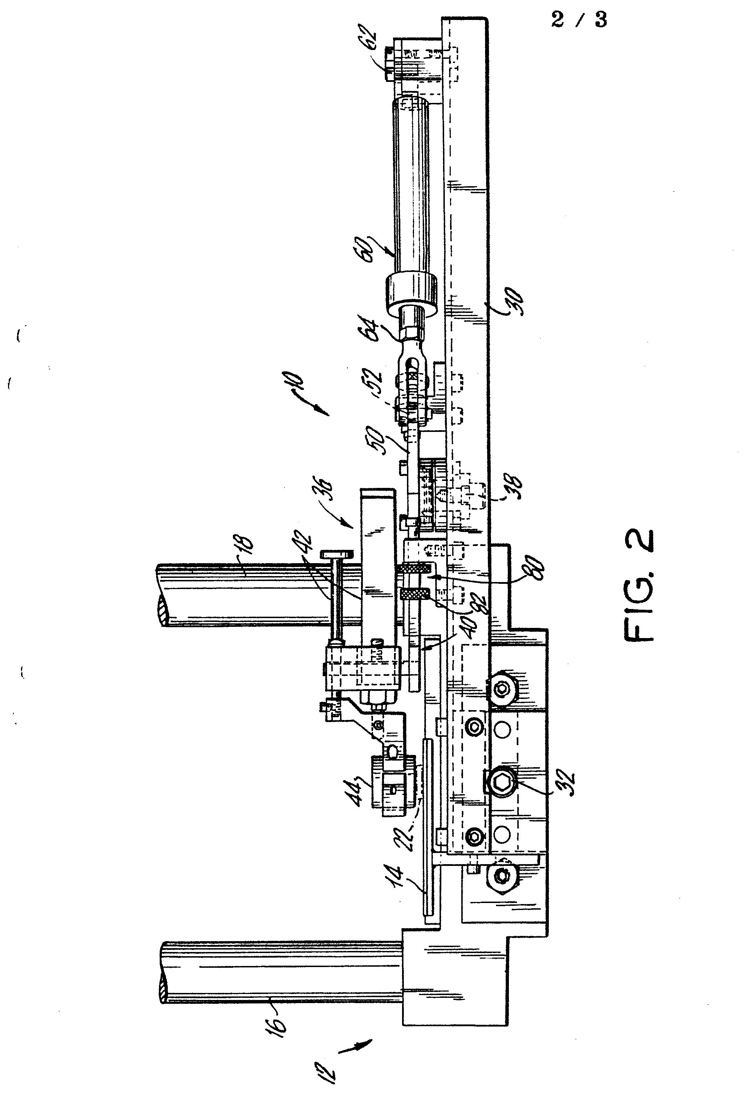

As shown in Figs. 2 and 3, the pick-off device 10 includes a platform 30 which is fixedly connected to the lower die plate 14 of the compacting press 12 by bolt 32. Device 10 includes an elongated member 36 which is angled or bent intermediate its length, and at the angled portion thereof is pivotally connected to the platform 30 by a pivot connection 38. Elongated member 36 includes a first arm portion 40 having a telescoping piston and cylinder arrangement 42, with the distal end of the piston carrying a pick-off unit 44. Pick-off unit 44 includes a suction gripping means 45 for precisely gripping and holding the compressed part 22. In one preferred pick-off device, the suction grip unit 44 includes flat wall surface 45 having a suction opening 46 therein. Suction opening 46 is elongated along the surface 45 so that when surface 45 makes complimentary contact with a flat surface of part 22, there is a soft but firm engagement over an extended area of part 22. Opening 46 is connected by means of a passage 47 to a vacuum source, not shown, as well as to related control equipment, not shown. It is most important in the manufacture of cemented carbides that the pressed powder metal parts not have any subsequent cutting edge damage during production. Accordingly, the pressed part must be removed from the press with great care so that precision of the pick-off unit is important to prevent undue mechanical contact. Slight variations are handled well with a suction grip unit. Moreover, the pick-off device must position the part 22 in another location for further handling. This further operation also requires a precise location and the combination of the pick-off device of this invention with a suction grip unit successfully performs these functions. The pick-off unit may also include, separately or in combination, such means as electro-magnets, samarium/cobalt permanent magnets, pneumatic grippers, or mechanical grippers. In addition, the pick-off unit 44 may contain a low pressure pneumatic or an electronic part sensing component in order to sense the presence of a pressed part 22 in the press cavity.

The elongated member 36 also includes a second arm portion 50 at the opposite end thereof, with arm portion 50 being integral and rigidly spatially fixed relative to the first arm portion 40. An actuator 60 also forms a portion of the pick-off device 10 and is pivotally connected to the platform 30 as at 62, with the piston rod 64 of actuator 60 being pivotally connected to the distal end of the second arm portion 50 at pivot connection 52. By this arrangement, extension and retraction of the piston rod 64 of the actuator 60 results in rotation of the elongated member 36 about the pivot 38 from a first position (shown in solid lines in Fig. 1) to a second position (shown in dotted lines in Fig. 1). The first and second positions of the elongated member 36 are respectively shown in dotted and solid lines in Fig. 3.

In order to limit the extent of pivoting of the elongated member 36 to the desired first and second positions, first and second stop means are provided as part of the pick-off device 10. The first stop mechanism is designated by the numeral 70 and is fixedly secured to the platform 30, and includes an adjustment screw 72 for adjusting the length of stop rod 74 which is adapted to abut against the side edge 54 of the second arm portion 50. Similarly, the second stop mechanism 80 includes an adjustment screw 82 for stop rod 84 which abuts against the side edge 56 of the second arm portion 50 of the elongated member 36.

In operation, during a compacting cycle of operation of the compacting press 12, the piston rod 64 of the actuator 60 is retracted such that the first arm portion 40 of the elongated member 36 is aligned with the platform 30, and the pick-off unit 44 is disposed over the collection point 34. At such time, the second arm portion abuts against the first stop mechanism 70. After a metallic press part 22 has been formed, and the upper die plate (not shown) has been actuated upwardly, actuator 60 is actuated thereby causing rotation of the elongated member 36 in a counterclockwise direction as shown in Fig. 1 (toward the left as shown by the arrow in Fig. 3), and simultaneously the telescoping piston 42 is actuated thereby extending the length of the first arm portion 40 until the sensing mechanism in the pick-off unit 44 indicates that the latter is disposed above the press part 22. The suction grip pick-up mechanism 45 which is embodied in the pick-off unit 44, is then operated to engage or attract the metallic press part 22 to the pick-off unit 44 (see Fig. 2). At such time, the second arm portion 50 of the elongated member 36 bears against the rod 84 of the second stop unit 80. Next, to complete the operation of the pick-off device 10, the piston rod 64 of the actuator 60 is retracted, thereby causing clockwise rotation (as viewed in Fig. 1) of the elongated member 36 until such time as the side edge 54 abuts against the stop rod 74 of the first stop unit 70. Simultaneously, the telescoping piston 42 is retracted within the elongated member 36, and the pick-off unit 44 is thus disposed over the collection point 34, at which time the pick-off unit 44 is actuated to deposit the press part 22 onto the platform at collection point 34.

The suction grip type of mechanism embodied in the pick-off unit 44 for engaging the press part 22 is adjustable with respect to the material from which the press part is made. Furthermore, the operation of the suction gripping means and the sensing means within the pick-off unit 44 is coordinated by suitable conventional electronic or pneumatic control means to coordinate with the operation of the actuator 60 and the extension and retraction of the telescoping piston and cylinder 42 of the elongated member 36. Suitable conveying means may be provided in conjunction with the pick-off device 10 for conveying the deposited press parts 22 from the collection point 34 to a collection bin.

The press part pick-off device 10 may be operated independently of or in conjunction with a robot, and the utilization of the pick-off device 10 as an operator attended operation will fulfill all current federal and state compaction press safety regulations. Furthermore, the operation of the pick-off device 10 will be coordinated with the cycling operation of the compacting press 12, and it has been found that it is possible to achieve very smooth and highly efficient removal and transfer of pressed parts from the compacting press 12 to the collection point 34, even at cycle rates on the order of 28 cycles per minute.

It is to be understood that changes may be made in the particular embodiment of the invention in light of the above teachings, but that these will fall within the full scope of the invention as defined by the appended claims.

WHAT IS CLAIMED IS:

1. A pick-off device for removing and transferring a manufactured part from the point of manufacture in a manufacturing machine to a collection point adjacent said machine comprising:

a platform disposed adjacent said manufacturing machine;

an elongated member pivotally mounted at an intermediate point thereof on said platform, one end of said elongated member including means for picking up and holding said manufactured part; and

an actuator mounted on said platform and operatively connected to the opposite end of said elongated member whereby, in a first pivotal position of said elongated member, a manufactured part may be picked up and held by the elongated member, after which the actuator may be operated to cause said elongated member to be rotated to a second pivotal position such that the manufactured part may be deposited at said collection point.

2. A pick-off device for removing and transferring a manufactured part from the point of manufacture in a manufacturing machine to the collection point adjacent said machine as in Claim 1 wherein said one end of the elongated member including the means for picking up and holding said manufactured part is of variable length and comprises a telescoping piston, with said pick-up and holding means being disposed at the distal end thereof.

3. A pick-off device for removing and transferring a manufactured part from the point of manufacture in a manufacturing machine to the collection point adjacent said machine as in Claim 1 wherein said manufactured part is made of compressed metallic material and said pick-up and holding means comprises a suction gripping unit.

4. A pick-off device for removing and transferring a manufactured part from the point of manufacture in a manufacturing machine to the collection point adjacent said machine as in Claim 1 wherein first and second stop means are mounted on said platform to limit pivotal movement of the elongated member.

5. A pick-off device for removing and transferring a manufacturedpart from the point of manufacture in a manufacturing machine to the collection point adjacent said machine as in Claim 4 wherein said first and second stop means are adjustable.

6. A pick-off device for removing and transferring a manufactured part from the point of manufacture in a manufacturing machine to the collection point adjacent said machine as in Claim 1 wherein the opposite end of said elongated member is angled relative to the longitudinal axis of said one end of the elongated member.

7. A pick-off device for removing and transferring a manufactured part from the point of manufacture in a manufacturing machine to the collection point adjacent said machine as in Claim 1 wherein said pick-up and holding means further includes electronic sensing means for sensing the presence of a manufactured part at the point of manufacture in the manufacturing machine.

8. A pick-off device for removing and transferring a manufactured part from the point of manufacture in a manufacturing machine to a collection point adjacent said machine comprising:

a platform disposed adjacent said manufacturing machine;

an elongated member pivotally mounted at an intermediate point thereof on said platform, with one end of said member including means for picking up, holding and sensing the presence of said manufactured part;

an actuator mounted on said platform and operatively connected to the opposite end of said elongated member, said actuator being operative to actuate said elongated member from a first pivotal position wherein said pick-up/holding/sensing means is disposed adjacent said manufactured part for sensing, picking up, and holding same, and a second pivotal position wherein said one end of the elongated member is disposed over said collection point; and

first and second stop means mounted on said platform to limit the pivotal movement of said elongated member between said first and second pivotal positions.

9. A pick-off device for removing and transferring a manufactured part from the point of manufacture in a press apparatus to the collection point adjacent said machine as in Claim 8 wherein said manufactured part is a pressed metallic powder material and said pick-up and holding means includes a suction gripping unit.

10. A pick-off device for removing and transferring a pressed powdered metal polygon part from the point of manufacture in a manufacturing machine to the collection point adjacent said machine as in Claim 9, wherein said one end of the elongated member is of variable length and includes telescoping piston arrangement, with the pick-up/holding/sensing means being disposed at the distal end thereof, said suction gripping unit having a flat elongated wall surface with an elongated vacuum opening therein, and adapted to complimentarily engage a flat elongated wall surface of a pressed powdered metal polygon part.

FIG.1

FIG. 2

FIG. 3

| | DOCUMENTS CONSIDERED TO BE RELEVANT | | EP 83104948.1 |
|---|---|---|---|
| Category | Citation of document with indication, where appropriate, of relevant passages | Relevant to claim | CLASSIFICATION OF THE APPLICATION (Int. Cl. ³) |
| X | US - A - 3 387 717 (ROFE) <br> * Totality * | 1,2 | B 30 B 15/32 <br> B 23 Q 7/04 |
| Y | | 3 | |
| | -- | | |
| Y | FR - A1 - 2 444 542 (LONGINOTTI) <br> * Page 1, lines 4-27; fig.6 * | 3 | |
| | -- | | |
| A | GB - A - 1 451 036 (THE GLEASON) <br> * Totality * | | |
| | ---- | | |

**TECHNICAL FIELDS SEARCHED (Int. Cl. ³)**

B 23 Q
B 28 B
B 30 B

The present search report has been drawn up for all claims

| Place of search | Date of completion of the search | Examiner |
|---|---|---|
| VIENNA | 12-08-1983 | GLAUNACH |